# EUROPÄISCHE PATENTSCHRIFT

(11) **EP 1 135 331 B1**
(45) Veröffentlichungstag und Bekanntmachung des Hinweises auf die Patenterteilung: **05.06.2002**
(21) Anmeldenummer: 99953881.2
(22) Anmeldetag: 19.10.1999
(51) Int. Cl.: C01C 1/10, C02F 1/58

(54) **VERFAHREN ZUM GEWINNEN VON AMMONIAK AUS EINEM NH 3? UND SAUERGASE ENTHALTENDEN ABWASSER**
METHOD FOR OBTAINING AMMONIA FROM WASTE WATER CONTAINING NH 3? AND ACID GASES
PROCEDE D'OBTENTION D'AMMONIAC A PARTIR D'EAUX RESIDUAIRES RENFERMANT NH 3? ET DES GAZ ACIDES

(30) Priorität: 21.10.1998 DE 19848499
(43) Veröffentlichungstag der Anmeldung: 26.09.2001
(73) Patentinhaber: MG Technologies AG, 60325 Frankfurt am Main (DE)
(72) Erfinder: STÖNNER, Hans-Martin, D-65760 Eschborn (DE); UNGAR, Gert, D-60598 Frankfurt am Main (DE); LINICUS, Matthias, D-65817 Eppstein (DE)
(86) Internationale Anmeldenummer: EP9907910
(87) Internationale Veröffentlichungsnummer: WO0023379

(56) Entgegenhaltungen:
- EP-A- 0 654 443
- DE-A- 3 735 868
- DE-C- 3 520 934

## Beschreibung

Die Erfindung betrifft ein Verfahren zum Gewinnen von Ammoniak aus einem NH₃, mindestens ein Sauergas (CO₂ und/oder H₂S), und Inertgase enthaltenden Abwasser, welches man zunächst durch eine Vorreinigungskolonne leitet und dann mindestens teilweise einer Totalabtreibekolonne aufgibt, wobei man ein NH₃ und Sauergas enthaltendes Kopfprodukt aus der Totalabtreibekolonne einem Kondensator zuführt, in welchem das Kopfprodukt mit im Kreislauf geführtem und gekühltem Kondensat berieselt wird, ein aus dem Kondensator kommendes, NH₃ enthaltendes wäßriges Kondensat wird einer NH₃-Abtreibekolonne zugeführt, deren Kopfprodukt in einer Waschkolonne mit umlaufendem, NH₃ enthaltendem wäßrigem Kondensat in direkten Kontakt gebracht wird, wobei man aus dem Kopfprodukt der Waschkolonne NH₃ gewinnt und einen Teil des Sumpfprodukts der Waschkolonne in die NH₃-Abtreibekolonne zurückführt. Das Abwasser, das stets mindestens eines der Sauergase CO₂ und/oder H₂S enthält, kann z.B. auch noch HCN enthalten.

Ein solches Verfahren ist aus EP-B-0 212 690 bekannt. Die Vorreinigungskolonne ist hierbei als einfache Strippkolonne ausgestaltet, so daß das behandelte Abwasser noch einen erheblichen Teil der schwer entfernbaren Verunreinigungen enthält. Dies führt dazu, daß schließlich gewonnenes Ammoniakwasser ebenfalls einen noch relativ hohen Gehalt an Verunreinigungen aufweist.

Der Erfindung liegt die Aufgabe zugrunde, das bekannte Verfahren so umzugestalten, daß die der NH₃-Gewinnung vorgeschaltete Waschkolonne entlastet wird, und sauberes, wäßriges NH₃ erzeugt werden kann. Erfindungsgemäß gelingt dies beim eingangs genannten Verfahren dadurch, daß die Vcrreinigungskolonne mit einer Beheizung des Sumpfbereichs ausgestattet ist und die Temperatur im Sumpfbereich 130 bis 200°C beträgt, daß man einen Teilstrom des Abwassers dem oberen Bereich der Vorreinigungskolonne aufgibt, und einen zweiten Teilstrom des Abwassers unterhalb des ersten Teilstroms in die Vorreinigungskolonne leitet, daß man im Kondensator mindestens 80 % und vorzugsweise mindestens 95 % des NH₃ kondensiert, welches im Kopfprodukt aus der Totalabtreibekolonne enthalten ist, und daß man aus der Totalabtreibekolonne einen Abwasserstrom abzieht, mindestens einen Teil des Abwasserstroms auf Temperaturen von 10 bis 60°C kühlt und den gekühlten Abwasserstrom in den Kopfbereich der Vorreinigungskolonne leitet.

In der Vorreinigungskolonne werden Inertgase und Sauergase (CO₂ und H₂S) sehr wirksam entfernt, wodurch die nachfolgenden Kolonnen entlastet werden. Dies führt unter anderem dazu, daß das Kopfprodukt der Totalabtreibekolonne vollständig kondensiert werden kann. Auch kann der Druck in der waschkolonne eingestellt werden und man gewinnt dennoch sauberes Ammoniakwasser.

Der Druck in der Vorreinigungskolonne liegt üblicherweise im Bereich von 1 bis 20 bar und beträgt vorzugsweise mindestens 2 bar. Der zweite Teilstrom des Abwassers, den man unterhalb der Zuführstelle des ersten Teilstroms in die Vorreinigungskolonne leitet, wird vorzugsweise durch indirekten Wärmeaustausch mit dem aus dem Sumpf der Vorreinigungskolonne kommenden Abwasser auf Temperaturen von mindestens 50°C und vorzugsweise mindestens 80°C vorgewärmt.

Es ist zweckmäßig, 1 bis 40 % des aus dem Sumpf der Vorreinigungskolonne abgezogene Abwassers unter Umgehung der Totalabtreibekolonne in den Kondensator zu leiten. Auf diese Weise kann man die Belastung in der Totalabtreibekolonne regeln und deren Heizungsbedarf optimieren.

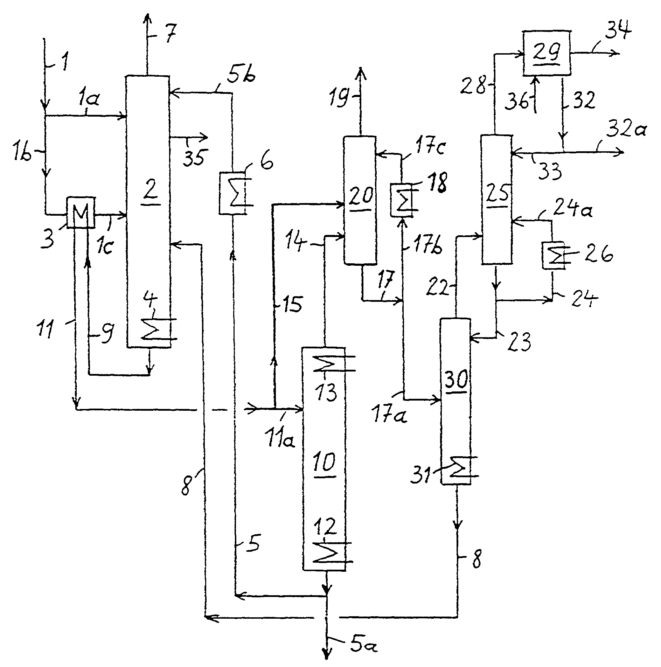

Ausgestaltungsmöglichkeiten des Verfahrens werden mit Hilfe der Zeichnung erläutert, sie zeigt ein Fließschema des Verfahrens.

Das zu behandelnde Abwasser wird in der Leitung (1) herangeführt. Es kommt z.B. aus einer Raffinerie oder einer Anlage zur Kohlenvergasung. Das Abwasser enthält NH₃ als wertstoff und daneben zahlreiche weitere Komponenten, insbesondere eines oder mehrere Sauergase wie CO₂ und/oder H₂S, dazu Inertgase und möglicherweise HCN und auch Reste von Kohlenwasserstoffen oder Lösungsmitteln. Ein erster Teilstrom des Abwassers wird durch die Leitung (1a) in den oberen Bereich einer Vorreinigungskolonne (2) gegeben. Das restliche Abwasser wird durch die Leitung (1b) geführt und vor Eintritt in die Kolonne (2) durch die Leitung (1c) etwa in deren Mittelbereich im indirekten Wärmeaustauscher (3) auf mindestens 50°C und vorzugsweise mindestens 80°C angewärmt. Die Vorreinigungskolonne (2) sowie auch die anderen Kolonnen enthalten an sich bekannte Böden oder auch Füllkörper. Der Sumpfbereich der Kolonne (2) ist mit einer Beheizung (4) versehen, so daß man dort Temperaturen von 130 bis 200°C erreicht.

Das in einer Totalabtreibekolonne (10) anfallende Abwasser wird teilweise durch die Leitungen (5) und (5b) auf den Kopf der Kolonne (2) gegeben, wobei das Abwasser zuvor durch einen Kühler (6) geführt und auf Temperaturen im Bereich von 10 bis 60°C eingestellt wird. Ein weiterer Abwasserstrom kommt aus einer NH₃-Abtreibekolonne (30) und wird durch die Leitung (8) dem unteren Teil der Kolonne (2) zugeführt. Abgetriebene Gase und Dämpfe verlassen die Kolonne (2) in der Leitung (7).

Falls nötig, zieht man durch die Leitung (35) einen wasserhaltigen Flüssigkeitsstrom ab, der Kohlenwasserstoffe und/oder Lösungsmittel enthält und einer nicht dargestellten Aufarbeitung zugeführt wird.

Das im Sumpf der Kolonne (2) anfallende Abwasser wird in der Leitung (9) abgezogen, zum Kühlen durch den Wärmeaustauscher (3) geführt und dann in den Leitungen (11) und (11a) der Totalabtreibekolonne (10) aufgegeben. In der Kolonne (10) wird dafür gesorgt, daß das freie NH₃ und restliche Sauergase vollständig aus dem Abwasser entfernt werden. Zu diesem Zweck ist die Kolonne (10) mit einer Sumpfbeheizung (12) ausgestattet, wodurch die Sumpfflüssigkeit auf Temperaturen von 100 bis 180°C gebracht wird. Die Kolonne (10) enthält ferner eine Kopfkühlung (13). Es kann regelungstechnisch zweckmäßig sein, einen Teilstrom von 1 bis 40 % des vom Wärmeaustauscher (3) kommenden, in der Leitung (11) herangeführten Abwassers abzuzweigen und durch die Leitung (15) in den Kondensator (20) zu führen. Ein Teilstrom des aus der Kolonne (10) abgezogenen Abwassers wird durch die Leitung (5a) entfernt und kann z.B. einer biologischen Abwasserreinigung zugeführt werden.

Das NH₃-reiche Kopfprodukt der Kolonne (10) wird durch die Leitung (14) in einen Kondensator (20) geführt, der ebenfalls mit Böden oder Füllkörpern ausgerüstet ist. In den oberen Bereich des Kondensators (20) gibt man durch die Leitung (17c) Kondensat, das vom Kühler (18) kommt und teilweise durch die Leitungen (17) und (17b) im Kreislauf geführt wird. Das aus dem Kondensat (20) in der Leitung (19) abgezogene Gasgemisch enthält vor allem Inertgase.

Das Kondensat der Leitung (17) wird auf die Leitungen (17a) und (17b) aufgeteilt. Die Leitung (17a) führt zur NH₃-Abtreibekolonne (30), die ebenfalls mit einer Beheizung (31) ausgerüstet ist. Die Sumpfflüssigkeit der Kolonne (30) wird in der bereits erläuterten Weise durch die Leitung (8) zurück zur Vorreinigungskolonne (2) geführt. Das Kopfprodukt gibt man durch die Leitung (22) in die Waschkolonne (25), deren Ausgestaltung und Betriebsweise ausführlich in EP-B-0 212 690 beschrieben ist. In der Kolonne (25) ablaufende Flüssigkeit wird teilweise durch die Leitung (23) in die Kolonne (30) zurückgeführt, die restliche Flüssigkeit wird mit dem Kreislauf durch die Leitung (24) und den Kühler (26) zurück in den unteren Bereich der Kolonne (25) gegeben. Die Kolonne (25) ist vorzugsweise als in mehrere Abschnitte unterteilte Rieselkolonne ausgebildet, wobei der Druck im Bereich von 1 bis 20 bar liegt und die Temperaturen 20 bis 100°C betragen.

Vom Kopf der Kolonne (25) zieht man in der Leitung (28) ein vor allem aus NH₃ bestehendes Gasgemisch ab und führt es zu einer Ammoniak-Verflüssigung (29), aus welcher man flüssiges Ammoniak in der Leitung (34) und/oder Ammoniak-Wasser in der Leitung (32) abzieht. Das Ammoniak-Wasser wird teilweise durch die Leitung (33) zurück zum Kopf der Kolonne (25) geführt, der Rest steht in der Leitung (32a) als weiteres wetvolles Produkt zur Verfügung. Es ist möglich, entweder wäßriges oder flüssiges Ammoniak oder beide Produkte zu erzeugen. Wasser wird bei Bedarf in der Leitung (36) herangeführt.

### Beispiel 1

Ein Abwasser aus einer Erdöl-Raffinerie, das in einem 3-Phasen-Abscheider vorbehandelt wurde, führt man durch die Leitung (1) der in der Zeichnung dargestellten Aufarbeitung zu, wobei wäßriges Ammoniak erzeugt wird. Die Leitung (34) entfällt. Nach der Vorbehandlung im 3-Phasen-Abscheider enthält das Abwasser auch noch geringe Mengen an Kohlenwasserstoffen, die über die Leitung (35) abgezogen werden.

In der nachfolgenden Tabelle sind zu den wichtigsten Leitungen die Mengen (in kg/h) an den Hauptkomponenten H₂O, NH₃, H₂S und CO₂ sowie Druck und Temperatur aufgegeben; die Daten sind teilweise berechnet. Das Abwasser der Leitung (1) enthält auch Inertgase (z. B. H₂), die über die Leitung (7) abziehen. Inertgasreste verlassen die Aufarbeitung durch die Leitung (19).

**Tabelle**

| **Leitung** | **H**_{**2**}**O** | **NH**_{**3**} | **H**_{**2**}**S** | **CO**_{**2**} | **T(°C)** | **p (bar)** |
|---|---|---|---|---|---|---|
| 1 | 44870 | 851 | 900 | 1000 | 35 | 13 |
| 1a | 4711 | 89 | 95 | 105 | 35 | 13 |
| 1c | 40159 | 762 | 805 | 895 | 139 | 12,5 |
| 5b | 1820 | 0,1 | 0 | 0 | 35 | 3,5 |
| 5a | 45320 | 2 | 0,2 | 0 | 144 | 4 |
| 7 | 8 | 0,1 | 899,8 | 1000 | 45 | 10,7 |
| 8 | 4401 | 1800 | 540 | 37 | 75 | 3,5 |
| 9 | 51083 | 2651 | 540 | 37 | 165 | 11 |
| 11a | 48400 | 2512 | 512 | 35 | 86 | 11 |
| 14 | 1260 | 2510 | 512 | 35 | 110 | 4 |
| 15 | 2683 | 139 | 28 | 2 | 86 | 11 |
| 17a | 3943 | 2649 | 540 | 37 | 56 | 4 |
| 17c | 92849 | 62378 | 12716 | 871 | 47 | 4 |
| 22 | 21 | 1130 | 6 | 0,2 | 45 | 3,4 |
| 23 | 479 | 281 | 6 | 0,2 | 44 | 3,3 |
| 24a | 5578 | 3272 | 70 | 2,3 | 40 | 3,3 |
| 28 | 21 | 1009 | 0 | 0 | 45 | 3 |
| 32a | 2548 | 849 | 0 | 0 | 45 | 3 |
| 33 | 479 | 160 | 0 | 0 | 45 | 3 |
| 36 | 3006 | 0 | 0 | 0 | 30 | 4 |

In verschiedenen Leitungen findet man Spuren von H₂S und/oder CO₂ im ppm-Bereich, was aber in obiger Tabelle nicht berücksichtigt ist. Die Inertgase, die in der Leitung (19) abziehen, enthalten ebenfalls Spuren von NH₃ und Sauergasen.

## Patentansprüche

1. Verfahren zum Gewinnen von Ammoniak aus einem NH₃, mindestens eines der Sauergase CO₂ und/oder H₂S und Inertgase enthaltenden Abwasser, welches man zunächst durch eine Vorreinigungskolonne (2) leitet und dann mindestens teilweise einer Totalabtreibekolonne (10) aufgibt, wobei man ein NH₃ und Sauergas enthaltendes Kopfprodukt aus der Totalabtreibekolonne einem Kondensator (20) zuführt, in welchem das Kopfprodukt mit im Kreislauf geführtem und gekühltem Kondensat berieselt wird, ein aus dem Kondensator kommendes, NH₃ enthaltendes wäßriges Kondensat wird einer NH₃-Abtreibekolonne (30) zugeführt, deren Kopfprodukt in einer Waschkolonne (25) mit umlaufendem, NH₃ enthaltendem wäßrigem Kondensat in direkten Kontakt gebracht wird, wobei man aus dem Kopfprodukt der Waschkolonne NH₃ gewinnt und einen Teil des Sumpfprodukts der Waschkolonne in die NH₃-Abtreibekolonne zurückführt, **dadurch gekennzeichnet, daß** die Vorreinigungskolonne (2) mit einer Beheizung des Sumpfbereichs ausgestattet ist und die Temperatur im Sumpfbereich 130 bis 200°C beträgt, daß man einen Teilstrom des Abwassers dem oberen Bereich der Vorreinigungskolonne aufgibt und einen zweiten Teilstrom des Abwassers unterhalb des ersten Teilstroms in die Vorreinigungskolonne leitet, daß man im Kondensator mindestens 80 % des NH₃ kondensiert, welches im Kopfprodukt aus der Totalabtreibekolonne (10) enthalten ist, und daß man aus der Totalabtreibekolonne einen Abwasserstrom abzieht, mindestens einen Teil des Abwasserstroms auf Temperaturen von 10 bis 60°C kühlt und den gekühlten Abwasserstrom in den Kopfbereich der Vorreinigungskolonne leitet.

2. Verfahren nach Anspruch 1, **dadurch gekennzeichnet, daß** man 1 bis 40 % des aus dem Sumpf der Vorreinigungskolonne abgezogenen Abwassers unter Umgehung der Totalabtreibekolonne in den Kondensator leitet.

3. Verfahren nach Anspruch 1 oder 2, **dadurch gekennzeichnet, daß** der Druck in der Vorreinigungskolonne 1 bis 20 bar beträgt.

4. Verfahren nach Anspruch 1 oder einem der folgenden, **dadurch gekennzeichnet, daß** man aus dem oberen Bereich der Vorreinigungskolonne einen wasserhaltigen Flüssigkeitsstrom abzieht.

5. Verfahren nach Anspruch 1 oder einem der folgenden, **dadurch gekennzeichnet, daß** man einen Teilstrom des Abwassers aus dem Sumpf der NH₃-Abtreibekolonne in die Vorreinigungskolonne leitet.

## Claims

1. A process for recovering ammonia from a waste water containing NH₃, at least one of the acid gases CO₂ and/or H₂S and inert gases, which is first passed through a prepurification column (2) and then fed at least in part to a total stripping column (10), wherein an overhead product containing NH₃ and acid gas is fed from the total stripping column to a condenser (20) in which the overhead product is sprinkled with circulated, cooled condensate, an NH₃-containing aqueous condensate coming from the condenser is fed to an NH₃-stripping column (30), the overhead product of which is brought into direct contact in a scrubber column (25) with circulating, NH₃-containing aqueous condensate, wherein NH₃ is recovered from the overhead product of the scrubber column and part of the bottom product of the scrubber column is returned to the NH₃-stripping column, **characterised in that** the prepurification column (2) is equipped with a heating means for the bottom region and the temperature in the bottom region is 130 to 200°C, that a partial stream of the waste water is fed to the upper region of the prepurification column and a second partial stream of the waste water is passed beneath the first partial stream into the prepurification column, that at least 80% of the NH₃ which is contained in the overhead product from the total stripping column (10) is condensed in the condenser, and that a stream of waste water is withdrawn from the total stripping column, at least part of the stream of waste water is cooled to temperatures of 10 to 60°C and the cooled stream of waste water is passed into the head region of the prepurification column.

2. A process according to Claim 1, **characterised in that** 1 to 40% of the waste water withdrawn from the bottom of the prepurification column is passed into the condenser, bypassing the total stripping column.

3. A process according to Claim 1 or 2, **characterised in that** the pressure in the prepurification column is 1 to 20 bar.

4. A process according to Claim 1 or one of the following claims, **characterised in that** a water-containing liquid stream is withdrawn from the upper region of the prepurification column.

5. A process according to Claim 1 or one of the following claims, **characterised in that** a partial stream of the waste water is passed from the bottom of the NH₃ stripping column into the prepurification column.

## Revendications

1. Procédé d'obtention d'ammoniac à partir d'eaux résiduaires renfermant du NH₃, au moins l'un des gaz acides CO₂ et/ou H₂S et des gaz inertes, eaux résiduaires que l'on envoie d'abord dans une colonne (2) de pré-épuration, que l'on charge ensuite au moins en partie sur une colonne (10) de distillation totale, dans lequel on envoie un produit de tête contenant du NH₃ et du gaz acide de la colonne de distillation totale à un condenseur (20), dans lequel on fait ruisseler le produit de tête sur du produit condensé refroidi et circulant en circuit fermé, on envoie un produit condensé aqueux provenant du condenseur et contenant du NH₃ à une colonne (30) de distillation du NH₃, dont le produit de tête est mis en contact direct dans une colonne (25) de lavage avec du produit condensé aqueux circulant contenant du NH₃, on obtient, à partir du produit de tête de la colonne de tête du lavage, du NH₃ et on retourne une partie du produit de queue de la colonne de lavage à la colonne de distillation de NH₃, **caractérisé en ce que** la colonne (2) de pré-épuration est munie d'un chauffage du pied de colonne et la température dans le pied de colonne est comprise entre 130 et 200°C, **en ce que** l'on charge un courant partiel des eaux résiduaires à la partie supérieure de la colonne de pré-épuration et on envoie un deuxième courant partiel des eaux résiduaires en dessous du premier courant partiel dans la colonne de pré-épuration, **en ce que** l'on condense dans le condenseur au moins 80 % du NH₃ qui est contenu dans le produit de tête provenant de la colonne (10) de distillation totale et **en ce que** l'on soutire de la colonne de distillation totale un courant d'eaux résiduaires, on refroidit au moins une partie du courant d'eaux résiduaires à des températures de 10 à 60°C et on envoie le courant d'eaux résiduaires refroidi dans la partie de tête de la colonne de pré-épuration.

2. Procédé suivant la revendication 1, **caractérisé en ce que** l'on envoie de 1 à 40 % des eaux résiduaires soutirées du pied de la colonne de pré-épuration dans le condenseur en contournant la colonne de distillation totale.

3. Procédé suivant la revendication 1 ou 2, **caractérisé en ce que** la pression dans la colonne de pré-épuration est comprise entre 1 et 20 bars.

4. Procédé suivant la revendication 1 ou l'une des suivantes, **caractérisé en ce que** l'on soutire de la partie supérieure de la colonne de pré-épuration un courant de liquide renfermant de l'eau.

5. Procédé suivant la revendication 1 ou l'une des suivantes, **caractérisé en ce que** l'on envoie un courant partiel des eaux résiduaires provenant du pied de la colonne de distillation de NH₃ à la colonne de pré-épuration.
